# EUROPÄISCHE PATENTANMELDUNG

(11) **EP 1 013 721 A2**
(43) Veröffentlichungstag der Anmeldung: **28.06.2000**
(21) Anmeldenummer: 99124028.4
(22) Anmeldetag: 09.12.1999
(51) Int. Cl.: C09B 67/42, D21H 21/28, C09D 11/02

(54) **Feste Phthalocyaninpräparationen**

(30) Priorität: 21.12.1998 DE 19858965
(71) Anmelder: BAYER AG, 51368 Leverkusen (DE)
(72) Erfinder: Stawitz, Josef-Walter, Dr., 51519 Odenthal (DE)

(57) **Zusammenfassung**

Feste Präparationen metallhaltiger oder -freier Phthalocyaninfarbstoffe,
a) die eine mittlere Teilchengröße von größer 100 µm besitzen und
b) die, in der 10fachen Menge Wasser gelöst, einen pH-Wen von größer gleich 10 ergeben,
eignen sich insbesondere zum Färben und Bedrucken von Papier, nach Lösen in Wasser.

## Beschreibung

Die Erfindung betrifft feste Präparationen von Phthalocyaninfarbstoffen, ein Verfahren zu ihrer Herstellung sowie ihre Verwendung zum Färben von cellulosehaltigen Materialien.

Flüssige Zubereitungen von Kupferphthalocyanin-Farbstoffen sind beispielsweise aus EP-A-596 383 sowie JP-297 468 bekannt und werden zum Färben von cellullosehaltigen Materialien, insbesondere von Papier eingesetzt. An derartige flüssige Präparationen, die im allgemeinen einen Farbstoffgehalt von 5 bis 25 Gew.-% aufweisen, werden hohe Anforderungen an die Lagerstabilität gestellt. Dabei dürfen sie über lange Zeit kein Ausfallen des Farbstoffs zeigen, da dadurch einerseits der eingestellte Farbstoffgehalt verändert und andererseits die Dosiereinrichtung verstopft werden kann.

Es wurden nun feste Präparationen metallhaltiger oder -freier Phthalocyaninfarbstoffe gefunden, die
a) eine mittlere Teilchengröße von mehr als 100 µm besitzen und
b) in der 10fachen Menge Wasser gelöst einen pH-Wert von größer gleich 10 ergeben.

Feste Präparationen, die bevorzugt eine mittlere Teilchengröße wie die der erfindungsgemäßen Präparationen aufweisen, werden im allgemeinen als Granulate bezeichnet. Die erfindungsgemäßen Präparationen besitzen vorzugsweise eine mittlere Teilehengröße von 100 bis 800 µm, insbesondere von 100 bis 400 µm.

Der pH-Wert der wässrigen Lösung, der sich beim Lösen der festen Präparation in der 10fachen Menge Wasser selbst einstellt, beträgt vorzugsweise 10 bis 13, insbesondere 11,0 bis 12,5.

Die erfindungsgemäße Präparation enthält bevorzugt metallhaltige Phthalocyanine, insbesondere Cu- oder Ni-Phthalocyanine. Besonders bevorzugt enthält sie sulfonamidgruppenhaltige Cu-Phthalocyanine.

Die metallhaltigen bzw. -freien Phthalocyanine, insbesondere Cu-Phthalocyanine tragen in einer bevorzugten Ausführungsform Sulfonamidgruppen und Sulfonsäuregruppen, wobei insbesondere 0,5 bis 3, insbesondere 0,5 bis 2 Sulfonsäuregruppen pro Phthalocyaninmolekül vorhanden sind. Ebenfalls bevorzugt sind Phthalocyanine, insbesondere Cu-Phthalocyanine, die als Sulfonamid ein aliphatisches Sulfonamid besitzen.

Besonders bevorzugt sind Cu-Phthalocyanine, die in Form der freien Säure
- y: SO₃H-Gruppen und
- x: gleiche oder verschiedene Reste der Formel -SO₂NHB tragen, wobei bei verschiedenen Resten SO₂NHB ihre Summe pro Molekül x beträgt,
worin
- B: für einen gegebenenfalls substituierten aliphatischen oder cycloaliphatischen Rest steht und
- x: für 1 bis 3,5 und
- y: für 0,5 bis 3,0
und die Summe von x und y 2,5 bis 4 beträgt.

Bevorzugt steht
- x: für 2 bis 3,5 und
- y: für 0,5 bis 2,0
und die Summe von x und y 2,5 bis 4, vorzugsweise 3 bis 4, beträgt.

In einer bevorzugten Ausführungsform enthält die feste Präparation Kupferphthalocyanine, die in Form der freien Säure der Formel (I) entsprechen 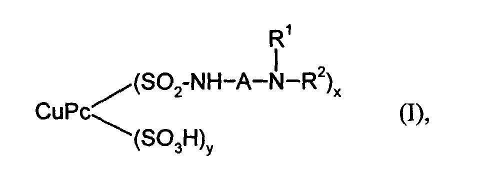 worin
- CuPc: für einen Kupferphthalocyanin-Rest steht,
- A: für gegebenenfalls substituiertes geradkettiges oder verzweigtes C₂-C₆-Alkylen steht,
- R¹ und R²: unabhängig für Wasserstoff, oder jeweils gegebenenfalls substituiertes geradkettiges oder verzweigtes C₁-C₆-Alkyl, insbesondere für gegebenenfalls substituiertes C₁-C₆-Hydroxyalkyl sowie für unsubstituiertes C₁-C₆-Alkyl stehen oder R¹ und R² zusammen mit dem N-Atom, an das sie gebunden sind einen heterocyclischen 5- oder 6-Ring bilden, der gegebenenfalls noch weitere Heteroatome, insbesondere S, N und 0 enthält,
- x: für 1 bis 3,5, insbesondere 2 bis 3,5 steht,
- y: für 0,5 bis 3, insbesondere 0,5 bis 2 steht
und die Summe von x und y 2,5 bis 4, vorzugsweise 3 bis 4, beträgt.

Als mögliche Substituenten für geradkettiges oder verzweigtes C₂-C₆-Alkylen in der Definition von A kommen beispielsweise OH und/oder C₁-C₆-Alkoxy in Frage.

Als mögliche Substituenten für geradkettiges oder verzweigtes C₁ -C₆-Alkyl in der Definition von R¹ und R² seien beispielsweise genannt: OH, C₁-C₆-Alkoxy, Sulfo, Amino, C₁-C₆-Alkylamino und/oderC₁-C₆-Dialkylamino, wobei die Alkylreste des Aminosubstituenten gegebenenfalls substituiert sind, vorzugsweise durch OH, COOH sowie SO₃H.

Bevorzugt sind Präparationen, die Kupferphthalocyanin-Verbindungen der Formel (I) enthalten, worin
- A: für Ethylen oder Propylen steht,
- R¹ und R²: unabhängig voneinander für Wasserstoff oder gegebenenfalls durch OH, CO₂H oder SO₃H substituiertes, geradkettiges oder verzweigtes C₁-C₄-Alkyl, insbesondere für unsubstituiertes C₁-C₃-Alkyl, vorzugsweises CH₃ stehen.

Besonders bevorzugt sind Präparationen, enthaltend wenigstens eine Verbindung der Formeln (IIa) bis (IId) 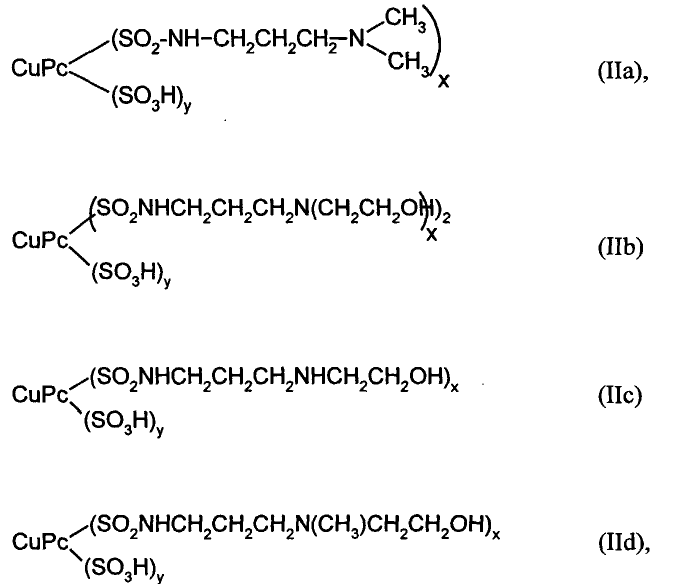 worin
- CuPc, x und y: die für die obengenannten Formeln angegebenen breitesten Bedeutungen haben.

Die erfindungsgemäßen festen Präparationen enthalten vorzugsweise
60 bis 98, insbesondere 60 bis 90, vorzugsweise 70 bis 85 Gew.-% metallhaltige oder -freie Phthalocyanin-Farbstoffe, insbesondere Kupferphthalocyanin-Farbstoffe.
2 bis 12 Gew.-%, insbesondere 5 bis 10 Gew.-% Restfeuchte,
0 bis 25, insbesondere 10 bis 20 Gew-% anorganische Salze,
0 bis 4, insbesondere 0 bis 1 Gew.-% weitere Zusätze,
jeweils bezogen auf die Präparation, wobei die Summe der genannten Zusätze 100 % ergibt.

Die erfindungsgemäßen Präparationen sind besonders staubarm und rieselfähig und zeichnen sich durch eine sehr gute Lagerstabilität aus. Desweiteren zeigen sie beim Einrühren in Wasser eine hohe Lösungsgeschwindigkeit und lösen sich glatt auf.

Die Erfindung betrifft weiterhin ein Verfahren zur Herstellung der erfindungsgemäßen festen Präparationen, das dadurch gekennzeichnet ist, daß man eine wässrige Lösung oder Suspension eines metallhaltigen oder -freien Phthalocyanin-Farbstoffs auf einen pH-Wert einstellt, so daß sich nach Lösen der getrockneten Phthalocyaninpräparation in der 10fachen Menge Wasser ein pH-Wert von größer gleich 10 einstellt und diese, gegebenenfalls nach Zugabe weiterer Zusätze, trocknet.

Die zu trocknende wässrige Lösung bzw. Suspension enthält vorzugsweise 10 bis 50 Gew.-% an metallhaltigem oder -freiem Phthalocyanin sowie gegebenenfalls anorganische Salze, insbesondere Neutralsalze, wie beispielsweise Natriumchlorid und/oder Natriumsulfat. Als weitere Zusätze kommen beispielsweise Tenside, Netzmittel, Entstaubungsmittel usw. in Frage. Bevorzugte weitere Zusätze sind Tenside. Auch die gegebenenfalls noch vorhandenen Basen werden unter weitere Zusätze gezählt.

Bevorzugt wird als zu trocknende Lösung bzw. Suspension direkt die Reaktionslösung oder -suspension eingesetzt.

Besonders bevorzugt werden die alkalischen Lösungen, die bei der Herstellung der Phthalocyanin-Farbstoffe anfallen, ohne weitere Zusätze direkt getrocknet.

Es kann weiterhin vorteilhaft sein, die zu trocknende wässrige Lösung bzw. Suspension vor dem Trocknen membrantechnisch aufzureinigen, insbesondere zu entsalzen.

Die Trocknung unter Entstehung der erfindungsgemäßen festen Präparation kann auf verschiedene Art und Weise erfolgen. Bevorzugt ist die Sprühtrocknung, wobei als Sprühorgan unter anderem sowohl Rotationsscheiben als auch Einstoff- bzw. Zweistoffdüsen in Frage kommen. Bevorzugt ist dabei die Einstoffdüse, insbesondere die Drallkammerdüse, die vorzugsweise mit einem Speisedruck von 20 bis 80 bar betrieben wird.

Die Eintritts- und Austrittstemperaturen bei der Sprühtrocknung richten sich nach der erwünschten Restfeuchte, nach sicherheitstechnischen Maßnahmen sowie nach ökonomischen Gesichtspunkten. Die Eintrittstemperatur liegt vorzugsweise bei 150 bis 180°C, und die Austrittstemperatur bei 40 bis 80°C.

Als Base zur Einstellung des pH-Wertes wird vorzugsweise Alkalihydroxid, insbesondere NaOH und/oder LiOH eingesetzt.

Die Erfindung betrifft weiterhin die Verwendung der erfindungsgemäßen Präparationen zum Färben und Bedrucken von cellulosehaltigen Materialien, insbesondere Papier und Zellstoff nach Lösen in Wasser und gegebenenfalls Einstellen des pH-Wertes auf 11 bis 13 sowie zur Herstellung von Drucktinten, insbesondere solche für den Ink-Jet-Druck, nach Lösen der Präparation in einem wässrigen Lösungsmittel. Für die Herstellung von Inkjettinten ist es bevorzugt, daß die erfindungsgemäße Präparation vor ihrer Trocknung mittels membrantechnischer Verfahren entsalzt wurde.

Für das Färben von Papieren und Zellstoffen bestehen im allgemeinen folgende Möglichkeiten:
(a) Massefärbung, bei der die Farbstoffe bzw. wässrigen Farbstoffpräparationen bei oder nach dem Mahlen des Zellstoffs der noch nicht zum Papier verarbeiteten Stoffmasse zugesetzt werden.
(b) Oberflächenfärbung, bei der die Farbstoffe bzw. wässrigen Farbstoffpräparationen während des Papierleimungsvorgangs der Leimungsflotte zugegeben werden.

Außerdem kommen noch die Methoden in Frage, bei denen eine Streichmasse aus Farbstoffen, anorganischen Weißpigmenten, Bindern und gegebenenfalls weiteren Zusätzen auf die Papieroberfläche aufgetragen wird.

Die aus der erfindungsgemäßen Präparation nach Lösen in Wasser hergestellte wässrige Farbstoffpräparation ist für jede der Färbemethode, vorzugsweise aber für die Massefärbung geeignet.

Beim Massefärben wird vorzugsweise zunächst der Zellstoff auf einen bestimmten Mahlgrad gemahlen. Dann wird 0,01 - 2,0 % der erfindungsgemäßen Farbstoff-Formierung bei 10 - 40°C der Stoffmasse zugesetzt, wobei im allgemeinen 0,01 bis 2,0 % Wirkstoffmenge, bezogen auf das Trockengewicht der Masse eingesetzt werden. Bei Bedarf werden außerdem übliche Leimungsmittel, Aluminiumsulfate, Papierverstärker, Fixiermittel u.a. nachgesetzt. Anschließend wird die Masse den üblichen Papierherstellungs- und Trocknungsvorgängen unterzogen. Auf diese Weise wird ein gleichmäßig brillant blau gefärbtes Papier erhalten.

Bei der Oberflächenfärbung in der Leimpresse wird vorzugsweise der Zellstoff ebenfalls vorerst auf einen bestimmten Mahlgrad gemahlen.

Dann werden nach Bedarf übliche Füllstoffe, Leimungsmittel, Aluminiumsulfate, Fixiermittel usw. der Stoffmasse zugesetzt. Anschließend wird die Stoffmasse nach üblicher Methode zum Papier verarbeitet. Danach wird das Papier in der Leimpresse mit einer Leimungsflotte, die die wässrige Farbstoff-Präparation enthält, behandelt und anschließend getrocknet. Auf diese Weise wird ein brillant türkisblau gefärbtes Papier erzielt.

Dabei beträgt der Gehalt an Phthalocyanin-Farbstoff in der Leimpressenflotte im allgemeinen 0,04 - 2,0 % (errechnet auf Basis Reingehalt), die Auflage der Streichmasse in der Regel 1 - 3 g/m² (Festgehalt), bezogen auf das Trockengewicht des Papiers.

Die wässrigen Farbstoffpräparationen zeigen eine hohe Affinität zur Cellulosefaser und ergeben damit eine gute Farbausbeute (hohe Farbtiefe). Die gefärbten Papiere zeichnen sich durch gute Wasser- und Ausblutechtheit aus.

Die nach dem erfindungsgemäßen Verfahren erhaltenen Phthalocyanin-Lösungen eignen sich vorzugsweise zum Bedrucken von Trägermaterialien mittels eines Tintenstrahlaufzeichnungssystems, insbesondere als Aufzeichnungsflüssigkeit. Vorzugsweise enthält eine solche Aufzeichnungsflüssigkeit 0,5 - 15 % eines Alkali- oder Ammoniumsalzes des Phthalocyanins, 0 bis 30 % eines oder mehrerer wasserlöslicher organischer Lösungsmittel, Wasser sowie gegebenenfalls weitere, für Tintenstrahlaufzeichnungsflüssigkeiten übliche Zusätze und weist einen pH-Wert von 9 bis 11 auf.

Geeignete wasserlösliche Lösungsmittel sind beispielsweise Glykole und Glykolether wie Ethylenglykol, Diethylenglykol, Triethylenglykol, 1 ,2-Dihydroxy-propan, 1-Ethoxy-2-hydroxy-propan, Polyethylenglykole mit Molekulargewichten bis 500 g/mol, heterocyclische Ketone wie 2-Pyrrolidon, 2-(N-Methyl)-pyrrolidon und 1,3-Dimethyl-imidazolin-2-on.

Das Tintenstrahlaufzeichnungsverfahren ist an sich bekannt. Dabei werden Tröpfchen einer Schreibflüssigkeit aus einer oder mehreren kleinen Düsen gezielt auf ein Trägermaterial, z.B. auf Papier, Holz, Textilien, Kunststoff oder Metall geschossen. Durch elektronische Aussteuerung werden die einzelnen Tröpfchen zu Schriftzeichen oder graphischen Mustern zusammengefaßt.

Die folgenden Beispiele sollen die vorliegende Erfindung erläutern.

Die Angabe 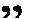 Teile" bezieht sich immer, falls nichts anderes angegeben, auf Gewichtsteile.

### Beispiele

### Beispiel 1

Eine wässrige Lösung des Kupferphthalocyaninfarbstoffs der Formel 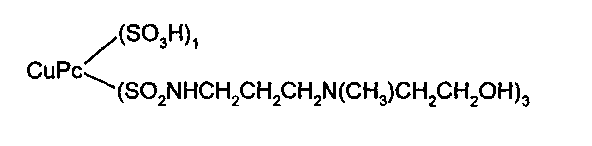 hergestellt nach den Angaben gemäß EP-A-596 383, Beispiel 1 wurde mit 50 %iger Natronlauge auf pH 12,5 bis 13,0 gestellt. Die Lösung enthielt ca. 14 Gew.-% Farbstoff und ca. 4 Gew.-% Natriumchlorid. Diese Lösung wurde in einem Druckdüsenturm zu einem Granulat bei einer Eingangstemperatur von 170°C und einer Austrittstemperatur von ca. 70°C sprühgetrocknet. Das Granulat hat einen mittleren Korndurchmesser von ca. 250 µm, die Restfeuchte beträgt ca. 7 %. Das Granulat ist rieselfähig, lagerstabil und staubarm, wovon sich 1 Teil glatt in 10 Teilen Wasser zu einer tiefblauen Lösung mit einem pH von 12,5 löste, die direkt zur Papierfärbung eingesetzt werden kann.

### Beispiel 2

Eine wässrige Lösung des Kupferphthalocyaninfarbstoffs der Formel 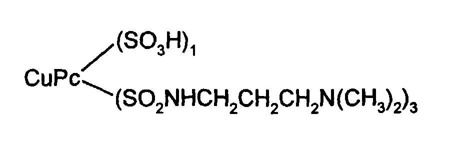 wurde analog Beispiel 1 auf pH 13,0 gestellt und sprühgetrocknet. Erhalten wurde ein rieselfähiges, staubarmes, lagerstabiles Granulat mit einem mittleren Korndurchmesser von ca. 280 µm, wovon sich 1 Teil glatt in 10 Teilen Wasser zu einer tiefblauen Lösung mit einem pH von 12,5 bis 13,0 löste und diese Lösung direkt zur Massefärbung von Papier eingesetzt wurde.

### Beispiel 3

Entsprechend den Beispielen 1 und 2 wurden folgende Farbstoffe in Form ihrer festen Granulate durch Sprühtrocknung hergestellt.

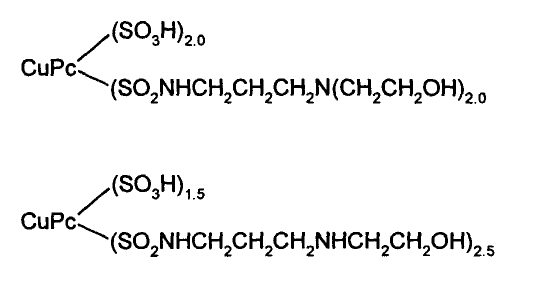

Das erhaltene Granulat ist staubarm, rieselfähig und lagerstabil und besitzt eine mittlere Teilchengröße von jeweils ca. 250 µm. Es löst sich in der 10fachen Menge Wasser glatt auf, wobei sich ein pH-Wert von jeweils ca. 12,5 einstellt.

## Patentansprüche

1. Feste Präparationen von metallhaltigen oder -freien Phthalocyanin-Farbstoffen, die
a) eine mittlere Teilchengröße von größer 100 µm besitzen und
b) in der 10fachen Menge Wasser gelöst, einen pH-Wert von größer gleich 10 ergeben.

2. Feste Präparationen gemäß Anspruch 1, dadurch gekennzeichnet, daß der pH-Wert einer wässrigen Lösung der festen Präparation in der 10fachen Menge Wasser 10 bis 13 beträgt.

3. Präparationen gemaß Anspruch 1, dadurch gekennzeichnet, daß sie eine mittlere Teilchengröße von 100 bis 800, vorzugsweise von 100 bis 400 µm besitzen.

4. Präparationen gemäß Anspruch 1, enthaltend
60 bis 98, vorzugsweise 60 bis 90, insbesondere 70 bis 85 Gew.-% metallhaltige oder -freie Phthalocyanin-Farbstoffe,
2 bis 12, insbesondere 5 bis 10 Gew.-% Restfeuchte,
0 bis 25, insbesondere 10 bis 20 Gew-% anorganische Salze,
0 bis 4, insbesondere 0 bis 1 Gew. -% weitere Zusätze,
jeweils bezogen auf die Präparation, wobei die Summe der genannten Zusätze 100 % ergibt.

5. Feste Präparation gemäß Anspruch 1 enthaltend metallhaltige Phthalocyanine, insbesondere Cu- oder Ni-Phthalocyanine.

6. Präparationen gemäß Anspruch 1, enthaltend als Phthalocyaninfarbstoffe sulfonamidgruppen- und sulfogruppenhaltige Kupferphthalocyanine, wobei insbesondere 0,5 bis 3 Sulfosäuregruppen pro Phthalocyanin vorhanden sind.

7. Feste Präparationen gemäß Anspruch 1, enthaltend als Phthalocyaninfarbstoffe Kupferphthalocyanine, die in Form der freien Säure
y SO₃H-Gruppen und
x gleiche oder verschiedene Reste der Formel -SO₂NHB tragen, wobei bei verschiedenen Resten SO₂NHB die Summe der verschiedenen Reste pro Molekül x beträgt,
worin
B für einen gegebenenfalls substituierten aliphatischen oder cycloaliphatischen Rest steht und
x für 1 bis 3,5 und
y für 0,5 bis 3,0 und die Summe von x und y 2,5 bis 4 beträgt.

8. Feste Präparationen gemäß Anspruch 1, enthaltend Kupferphthalocyanine, die in Form der freien Säure der Formel (I) entsprechen 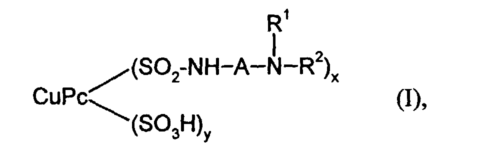 worin
CuPc für einen Kupferphthalocyanin-Rest steht,
A für gegebenenfalls substituiertes geradkettiges oder verzweigtes C₂-C₆-Alkylen steht,
R¹ und R² unabhängig für Wasserstoff, oder jeweils gegebenenfalls substituiertes geradkettiges oder verzweigtes C₁-C₆-Alkyl, insbesondere für gegebenenfalls substituiertes C₁-C₆-Hydroxyalkyl sowie für unsubstituiertes C₁-C₆-Alkyl stehen oder R¹ und R² zusammen mit dem N-Atom, an das sie gebunden sind einen heterocyclischen 5- oder 6-Ring bilden, der gegebenenfalls noch weitere Heteroatome, insbesondere S, N und 0 enthält,
x für 1 bis 3,5 steht,
y für 0,5 bis 3 steht, und die Summe von x und y 2,5 bis 4 beträgt.

9. Verfahren zur Herstellung fester Phthalocyaninpräparationen gemäß Anspruch 1, dadurch gekennzeichnet, daß man eine wässrige Lösung oder Suspension eines metallhaltigen oder -freien Phthalocyanins auf einen pH-Wert einstellt, so daß nach Lösen der getrockneten Phthalocyaninpräparation in der 10fachen Menge Wasser sich ein pH-Wert von größer gleich 10 einstellt und diese, gegebenenfalls nach Zugabe weiterer Zusätze, trocknet.

10. Verwendung fester Präparationen gemäß Anspruch 1 zum Färben und Bedrucken von cellulosehaltigen Materialien, insbesondere Papier oder Zellstoff nach Lösen in Wasser sowie zur Herstellung von Drucktinten nach Lösen der Festpräparation in einem wässrigen Lösungsmittel.
